# EUROPEAN PATENT APPLICATION

(11) **EP 2 757 506 A1**
(43) Date of publication of application: **23.07.2014**
(21) Application number: 14151508.0
(22) Date of filing: 16.01.2014
(51) Int. Cl.: G06Q 10/00, G06Q 10/10

(54) **System and method for categorizing postings in a social media computer system**

(30) Priority: 16.01.2013 US 201361753288 P; 15.03.2013 US 201313837223
(71) Applicant: Yappem, LLC, Sheboygan, WI 53083 (US)
(72) Inventor: Webb, Justin, Sheboygan, Wisconsin WI 53083 (US)
(74) Representative: Gosnall, Toby

(57) **Abstract**

A computer-implemented system for receiving user input to categorize user submissions in a social media setting is described. The system includes a commercial identifier database including a plurality of commercial product records, each record including at least one commercial identifier selected from the group of a commercial product name, a commercial product image, and terms used to identify the commercial product, a user account database including a plurality of user records, each user record including a plurality of data fields associated with a unique user in the social media setting, the data fields including at least a user name and user security information, a user submission module configured to receive a plurality of user submissions, each user submission including at least one commercial identifier, the user submission module further configured to request and receive a user submission categorization for each received user submission, a user submission display interface configured to display the received user submissions, and a categorization processing module configured to perform a user submission secondary action to at least one data field in the user account database based on the received user submission categorization.

## Description

### FIELD

The present invention relates to systems and methods for motivating user behavior in a social media setting. Specifically, the present invention relates to a system and method for receiving user input categorizing user submissions and providing user tradeable currency to the user based on the same.

### BACKGROUND

Social media communities, otherwise know as Social media networks, have dominated the time that Internet users spend online in recent years. For example, the social media sites of Facebook and Twitter have become mainstream platforms for users to connect with people in their lives. A social media community can be any computer implemented system that allows a user to provide a user submission, such as text messages, photos, videos, voice messages, etc. over a network connection for display to other users that are also connected to the social media network.

Users in social media communities typically create a user account that includes some type of identifying information such as at least a user name to be used in the social media community. Thereafter, the user can access the social media community to read user submissions provided by other users, provide comments on user submissions, provide their own user submissions, etc. Users can also specifically identify other users as "friends," such that user submissions from friends will be displayed more prominently, communication will be restricted to submissions from friends, only friends will be allowed to view user submissions, etc.

Accordingly, social media communities have made it easy for users to share information with large groups of people, both known and unknown. Although social media networks have become an excellent forum for exchanging information with a large number of people, businesses and brands have faced many obstacles in leveraging social media to connect with users. Current social media offerings are not designed to maximize commercial branding opportunities.

Additionally, although users often attempt to leverage the large community to obtain information such as comments, critiques, experiences, etc. regarding a particular restaurant, a commercial product, a travel destination, etc., the information received is not always plentiful or reliable. For example, although users often seek information from others, users do not always provide their own submissions even where they would have valuable information to share. Additionally, some users provide biased information for a variety of reasons, such that users are often skeptical about the quality of information received through social networks.

Moreover, the volume of information that is present on such social communities is very large and it can be a problem to locate information within such communities. Thus, it can be a technical challenge for the provider of the social media community to allow users thereof to find information. Further, another technical challenge is imposing a structure on the feedback being provided by users of commercial product such that the feedback becomes more usable. Another technical challenge is in providing the right timing and quantity of reward to motivate users to not only provide feedback, but also to utilize the structure imposed on the feedback and to assist other users in the same.

What is needed is a system and method for implementing a social media community that allows users to select a category the type of user submission being provided. What is further needed is such a system and method configured to provide a tradeable currency to users based on their activities that may be provided to other users to motivate behavior in the other users.

### SUMMARY

The present application is directed to a system and method for implementing a brand centric online community of socially active users that allows the users to interact, share, provide support, and be rewarded for voicing their brand experiences. Particularly, the present application is directed to such a system and method that allows users to categorize their user submissions regarding their brand experiences and to be rewarded financially for sharing experiences. In rewarding users financially, users may receive credit for every post they can be traded for gift cards or may share credit with friends to elicit their input on particular products.

According to one exemplary embodiment, a computer-implemented system for receiving user input to categorize user submissions in a social media setting is described. The system includes a commercial identifier database including a plurality of commercial product records, each record including at least one commercial identifier selected from the group of a commercial product name, a commercial product image, and terms used to identify the commercial product, a user account database including a plurality of user records, each user record including a plurality of data fields associated with a unique user in the social media setting, the data fields including at least a user name and user security information, a user submission module configured to receive a plurality of user submissions, each user submission including at least one commercial identifier, the user submission module further configured to request and receive a user submission categorization for each received user submission, a user submission display interface configured to display the received user submissions, and a categorization processing module configured to perform a user submission secondary action to at least one data field in the user account database based on the received user submission categorization.

According to one variation of the invention, the secondary action includes crediting a user currency data field in the user account database, and further includes incrementing a counter associated with the at least one commercial identifier included in the user submission and crediting the user currency data field is dependent on the value of the counter relative to an award threshold. The award threshold can include an hourly award threshold and a daily award threshold.

According to another variation of the invention, the user submission categorization is selected from the group of a support category, an experience category, a suggestion category, and a comparison category. The secondary action can include receiving a bounty amount from a first user providing a submission, debiting a user currency data field by the bounty amount for the first user, and crediting a user currency data field by the bounty amount for a second user in the user account database and the user submission module may be configured to request submission of the bounty amount based on a selection of the support or comparison categories.

According to another exemplary embodiment, a computer-implemented method for receiving user input to categorize user submissions in a social media setting is described. The method includes receiving a user submission including at least one commercial identifier selected from the group of a commercial product name, a commercial product image, and terms used to identify the commercial product, receiving a user submission categorization for the received user submission, performing a user submission secondary action to at least one data field in a user account database including a plurality of user records, each user record including a plurality of data fields associated with a unique user in the social media setting based on the received user submission categorization, and displaying the received user submissions.

According to yet another exemplary embodiment, a computer-implemented system for receiving user input to categorize user submissions in a social media setting is described. The system includes a commercial identifier database including a plurality of commercial product records, each record including at least one commercial identifier selected from the group of a commercial product name, a commercial product image, and terms used to identify the commercial product, a user account database including a plurality of user records, each user record including a plurality of data fields associated with a unique user in the social media setting, the data fields including at least a user name and user security information, a user submission module configured to receive a plurality of user submissions, each user submission including at least one commercial identifier, a user submission display interface configured to display the received user submissions, and a submission processing module configured to receive a bounty amount from a first user providing a submission, debit a user currency data field by the bounty amount for the first user, and credit a user currency data field by the bounty amount for a second user in the user account database.

Other features and advantages of the invention will become apparent to those skilled in the art from the following detailed description and accompanying drawings. It should be understood, however, that the detailed description and specific examples, while indicating the preferred embodiments of the present invention, are given by way of illustration and not of limitation. Many changes and modifications may be made within the scope of the present invention without departing from the spirit thereof, and the invention includes all such modifications.

According to one aspect of the invention there is provided a computer-implemented system for receiving user input to categorize user submissions in a social media setting, comprising:
a commercial identifier database including a plurality of commercial product records, each record including at least one commercial identifier selected from the group of a commercial product name, a commercial product image, and terms used to identify the commercial product;
a user account database including a plurality of user records, each user record including a plurality of data fields associated with a unique user in the social media setting, the data fields including at least a user name and user security information;
a user submission module configured to receive a plurality of user submissions, each user submission including at least one commercial identifier, the user submission module further configured to request and receive a user submission categorization for each received user submission;
a user submission display interface configured to display the received user submissions; and
a categorization processing module configured to perform a user submission secondary action to at least one data field in the user account database based on the received user submission categorization.

The system may be arranged such that the secondary action includes crediting a user currency data field in the user account database.

The system may further be arranged such that the secondary action includes incrementing a counter associated with the at least one commercial identifier included in the user submission and crediting the user currency data field is dependent on the value of the counter relative to an award threshold.

Conveniently, the system may be arranged such that the award threshold includes an hourly award threshold and a daily award threshold.

In some embodiments, the user submission categorization is selected from the group of a support category, an experience category, a suggestion category, and a comparison category.

In additional, or alternative embodiments, the secondary action includes receiving a bounty amount from a first user providing a submission, debiting a user currency data field by the bounty amount for the first user, and crediting a user currency data field by the bounty amount for a second user in the user account database.

The user submission module may be configured to request submission of the bounty amount based on a selection of the support or comparison categories.

According to a second aspect of the invention there is provided a computer-implemented method for receiving user input to categorize user submissions in a social media setting, comprising at least some of the following steps:
receiving a user submission including at least one commercial identifier selected from the group of a commercial product name, a commercial product image, and terms used to identify the commercial product;
receiving a user submission categorization for the received user submission;
perform a user submission secondary action to at least one data field in a user account database including a plurality of user records, each user record including a plurality of data fields associated with a unique user in the social media setting based on the received user submission categorization; and
displaying the received user submissions.

Conveniently, the method is arranged such that the secondary action includes crediting a user currency data field in the user account database.

Conveniently, the secondary action includes incrementing a counter associated with the at least one commercial identifier included in the user submission and crediting the user currency data field is dependent on the value of the counter relative to an award threshold.

In at least some embodiments, the award threshold includes an hourly award threshold and a daily award threshold.

Conveniently, the user submission categorization is selected from the group of a support category, an experience category, a suggestion category, and a comparison category.

The method may be arranged such that the secondary action includes receiving a bounty amount from a first user providing a submission, debiting a user currency data field by the bounty amount for the first user, and crediting a user currency data field by the bounty amount for a second user in the user account database.

In at least some embodiments, the user submission module is configured to request submission of the bounty amount based on a selection of the support or comparison categories.

According to a further aspect of the invention there is provided a computer-implemented system for receiving user input to categorize user submissions in a social media setting, comprising:
a commercial identifier database including a plurality of commercial product records, each record including at least one commercial identifier selected from the group of a commercial product name, a commercial product image, and terms used to identify the commercial product;
a user account database including a plurality of user records, each user record including a plurality of data fields associated with a unique user in the social media setting, the data fields including at least a user name and user security information;
a user submission module configured to receive a plurality of user submissions, each user submission including at least one commercial identifier;
a user submission display interface configured to display the received user submissions; and
   a submission processing module configured to
   receive a bounty amount from a first user providing a submission,
   debit a user currency data field by the bounty amount for the first user, and credit a user currency data field by the bounty amount for a second user in the user account database.

The system may be further arranged to include incrementing a counter associated with the at least one commercial identifier included in the user submission and crediting the user currency data field is dependent on the value of the counter relative to an award threshold.

In at least some embodiments, the threshold includes an hourly award threshold and a daily award threshold.

The submission processing module may be configured to identify a plurality of commercial identifiers within the user submission and the bounty amount that is received is based on the number of commercial identifiers.

The user submission categorization may be selected from the group of a support category, an experience category, a suggestion category, and a comparison category.

The user submission module may be configured to request submission of the bounty amount based on a selection of the support or comparison categories.

According to one aspect of the invention there is provided a computer-implemented system for receiving user input to categorize user submissions in a social media community, comprising:
an identifier database including a plurality of product records, each record including at least one commercial identifier selected from the group of a product name, a product image, and terms used to identify the product;
a user account database including a plurality of user records, each user record including a plurality of data fields associated with a unique user in the social media community, the data fields including at least a user name and user security information;
a user submission module configured to receive a plurality of user submissions, each user submission including at least one identifier, the user submission module further configured to request and receive a user submission categorization for each received user submission;
a user submission display interface configured to display the received user submissions; and
a categorization processing module configured to perform a user submission secondary action to at least one data field in the user account database based on the received user submission categorization.

According to another aspect of the invention there is provided a computer-implemented system for receiving user input to categorize user submissions within in a social media community, comprising at least one of the following:
an identifier database including a plurality of product records, wherein each record may include at least one identifier selected from the group of a product name, a product image, and terms used to identify the product;
a user account database including a plurality of user records, wherein each user record may include a plurality of data fields associated with a unique user in the social media setting, the data fields including at least a user name and user security information;
a user submission module configured to receive a plurality of user submissions, wherein each user submission may include at least one identifier, and the user submission module may further be configured to request and receive a user submission categorization for each received user submission;
a user submission display interface configured to display the received user submissions; and
a categorization processing module configured to perform a user submission secondary action to at least one data field in the user account database based on the received user submission categorization.

A feature of any one of the above aspects of the invention may be applied, mutatis mutandis, to any of the other features of the invention.

### BRIEF DESCRIPTION OF THE DRAWINGS

Preferred exemplary embodiments of the invention are illustrated in the accompanying drawings in which like reference numerals represent like parts throughout, and in which:
FIG. 1 is a computer network shown as a representative environment for receiving user input categorizing user submissions and providing user tradeable currency to the user based on the same, according to an exemplary embodiment;
FIG. 2A-D are a flowchart illustrating a method for receiving user input categorizing user submissions and providing user tradeable currency to the user based on the same and screen shots of a display used to implement the method, according to an exemplary embodiment; and
FIG. 3 is a flowchart illustrating a method for processing a support post or a compare post in the computer network of FIG. 1, according to an exemplary embodiment; and
FIG. 4 is a flowchart illustrating a method for processing an experience post or a suggestion post in the computer network of FIG. 1, according to an exemplary embodiment.

Before explaining embodiments of the invention in detail, it is to be understood that the invention is not limited in its application to the details of construction and the arrangement of the components set forth in the following description and illustrated in the drawings. The invention is capable of other embodiments or being practiced or carried out in various ways. Also, it is to be understood that the phraseology and terminology employed herein is for the purpose of description and should not be regarded as limiting.

### DETAILED DESCRIPTION

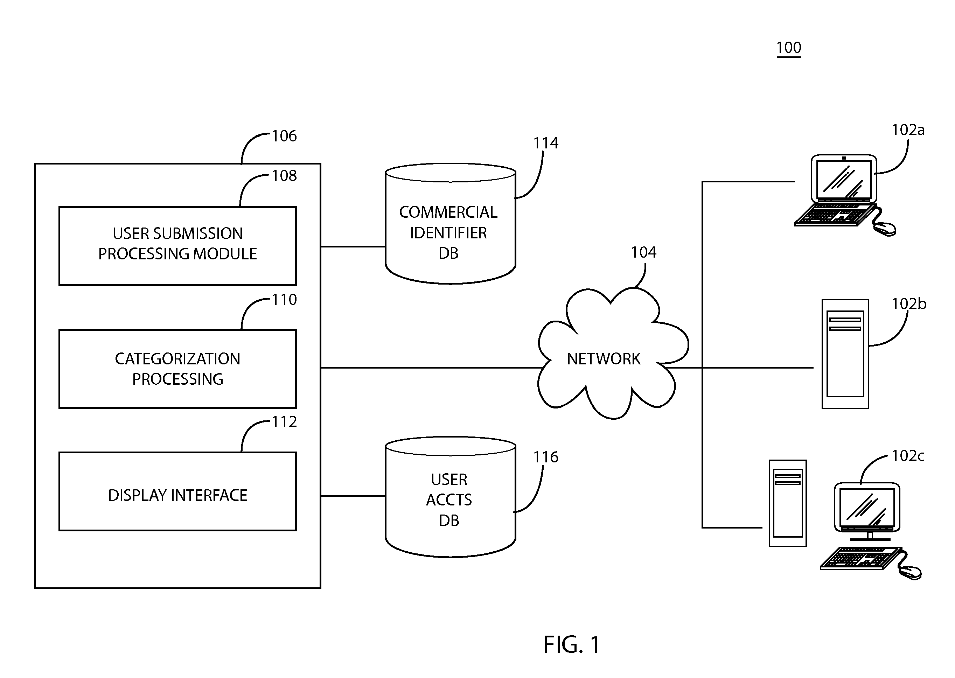

Referring now to FIG. 1, a social media environment 100 is shown as a representative environment for receiving user submissions, categorizing user submissions and providing user tradeable currency to the user based on the same, according to an exemplary embodiment. Social media environment 100 is intended to be representative of the complete spectrum of computer network environments, including Internet and internet-like networks, and computer systems communicating though such networks. Social media environment 100 includes a number of user computer systems, of which computer systems 102a through 102c are representative. Computers 102a through 102c may be configured to send and receive information through a computer network 104, such as the Internet. Computers 102a-c communicate through network 104 with a social media community computer system 106. Although environment 100 is shown as including specific components in a specific configuration, it should be understood that these components are merely intend be representative examples of one implementation of the functionality described herein. Alternative embodiments may include different components and/or a different configuration of components.

Computer systems 102 are intended to be representative of the wide range of large and small computer systems that are used in computer networks of all types. Examples shown include a laptop 102a, a smartphone 102b, and a desktop computer 102c although these examples are only intended to be representative of the myriad types of computing systems that may be utilized. Each computer system 102 includes a processor or processors and a memory. The processor can be selected from a wide range of commercially available or custom types. The memory may be one or more type of memory also selected from a wide range of commercially available or custom types, such as flash memory, RAM, ROM, disk drives, non-transient memory devices, etc. Systems 102 further include at least one input device and at least one output device such as disk drives, touch screens, keyboards, Wi-Fi transceivers, modems, network adapters, printers and displays.

Computer systems 102a through 102c may be associated with and used to perform social media functions such as receiving and display user submissions provided by the users of systems 102. User submissions may be any type of data file transmitted from a computer 102 to system 106 over network 104 for display to other users of the system 106, such as text files, audio files, video files, etc. Systems 102 may include dedicated applications, web browsers, etc. to facilitate interaction with social media community computer system 106.

Social media community computer system 106 is a computer system similar to systems 102. However, computer system 106 is configured to communicate with a large population of users and associated computer systems 102. Accordingly, system 106 may be configured to be implemented using a large number of integrated systems operating cooperatively to implement the functionality associated with receiving user input categorizing user submissions and providing user tradeable currency to the user based on the same. Computer system 106 includes at least one processor and memory type as described above with reference to computer systems 102.

Computer system 106 includes software stored in memory and executable by the processor to implement the social media network including receiving user input categorizing user submissions and providing user tradeable currency to the user based on the same as described in further detail below. Accordingly, computer system 106 is configured to implement a user submission processing module 108, a categorization processing module 110, and a user submission display interface 112. Computer system 106 is further configured to receive, store, and display information associated with the functionality described herein and includes a product identifier database 114 and a user account database 116 also described below in further detail. Again, although a specific configuration of a system 106 is shown and described herein, system 106 may also include different configuration and components to implement the functions described herein. Further, functionality described as being performed by one system or component may alternatively be performed by a different system or component.

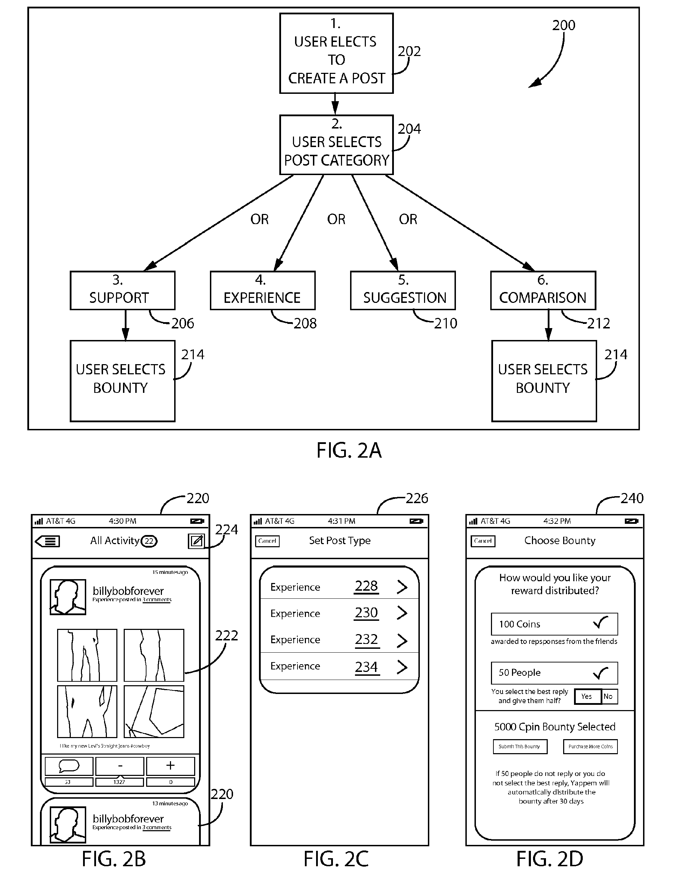

User submission processing module 108 is configured to receive at least one user submission from a user and further receive a categorization to be associated with the submitted user submission. Referring now also to FIGs. 2A-2D, a flowchart 200 illustrating a method for receiving user input categorizing user submissions and providing user tradeable currency to the user based on the same and screen shots of a display used to implement the method are shown, according to an exemplary embodiment. The method may be implemented in whole or in part by the user submission processing module 108 in combination with categorization processing module 110. Although a particular series of steps are shown and described in a particular order, it should be understood that the method of flowchart 200 may be implemented using more, fewer, and/or a different ordering of the steps to perform the function described herein.

In a step 202, user submission processing module 108 receives input from the user indicating that the user wishes to create a post. Referring now to FIG. 2B, the input may be received based on display of a social networking interface 220 configured to display a plurality of user submissions 222 provided by users of the social networking system 100. To initiate step 202, the user accesses an icon 224 for creating a user submission on display 220, displayed through the user submission display interface 112.

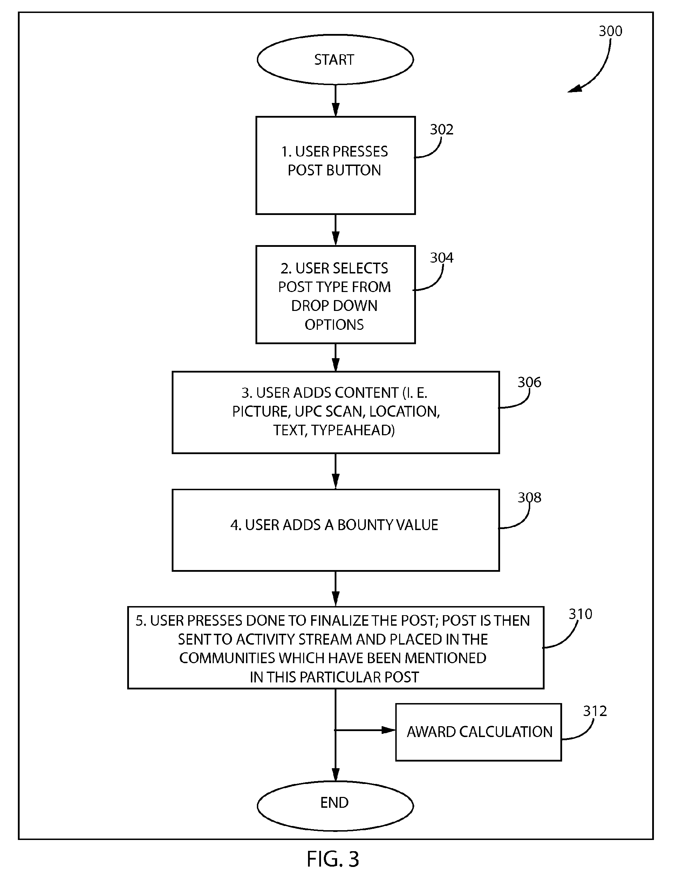

In a step 204, the user creating the user submission is prompted by a user submission processing module 108 to select a category to be associated with the provided user submission; thus, the user submission processing module 108 provides a categorization mechanism. Referring now to FIG. 2C, a display 226 is displayed to the user following provision of the user submission. Display 226 illustrates exemplary user submission categories that may be selected by the user. The categories include an experience category type 228, a compare category type 230, a suggestion category type 232, and a support category type 234. The provision of such categories, in at least some embodiments, can facilitate the location of information within a social media community. Based on their selection received in step 204, user submission processing module 108 is configured to perform one of a support processing step 206, an experience processing step 208, a suggestion processing step 210, or a comparison processing step 212, each of which being described in further detail below with reference to FIGs 3-6. According to exemplary embodiment, a support processing step 206 may be utilized by a user providing assistance to a different user within system 106, for example replying to a request for information provided in a user submission of another user and thereby such embodiments can increase the ease of use of the system. An experience post 208 may be utilized by a user composing a user submission sharing their unique experience with a commercial product and attaching specific content such as a picture, scanned universal product code (UPC), taking a location, and or providing a type ahead providing data entry suggestions based on context for other users of the system 106. A suggestion step 210 allows a user of system 106 to suggest something to a community using type ahead to identify a likely community and to direct their comments to the correct community. A comparison processing step 212 may be utilized by a user of system 106 to select two items, for example by taking a picture and typing a name for each item or scanning a UPC code, and eliciting a vote from other users of system 106 as to the best option between the two selected products. This step may be used, for example, when a user is trying to determine which of two products would better suit their needs and seeks a second opinion from the community. The categorization processing shown in steps 206-212 may be performed by the categorization processing module 110, shown in FIG. 1.

Following selection of a category for the user submission in steps 206-212, user submission processing module 108 is configured to determine whether the selected processing step requires an assignment of an amount of user tradable currency to be provided to another user of the system 106 based on completion of one or more actions by the user. Accordingly, displayed on interface 112 is configured to display a bounty assignment display 240 to allow a user to select a bounty amount in a step 214. The bounty amount is an amount of the user tradeable currency that the user has accrued based on their activities that the user is willing to share with other users in order to motivate them to provide a response to a user submission. For example, a user submitting a compare post to try and determine the best option between two selected products would want to increase the odds that other users provide feedback and would offer a bounty amount to anyone replying to the post to motivate their response.

As shown in display 240, selection of a bounty amount may include providing information indicating both how the bounty is to be distributed and the amount of the bounty. For example, a user may select an option to distribute a bounty amount in equal amounts to all respondents to a support and/or comparison user submission. Alternatively, the user may select a distribution option allows a user seeking feedback to select the best answer and to provide the respondent that gave the best answer half of the bounty amount with the remainder to be distributed equally to the remaining respondents. Although two exemplary embodiments of bounty distribution methods are described, a wide variety of distribution methods may alternatively be implemented.

Referring now to FIG. 3, a flowchart 300 illustrating a method for processing a support post or a compare post, as introduced in FIG. 2A, is shown in further detail, according to an exemplary embodiment. In a step 302, the user presses the post button, for example the create post icon 224 on display 220. In response, module 108 prompts the user to select a post type from drop-down options in a step 304. Thereafter, in a step 306, the user adds content such as, for example, a picture, a UPC scan, a user location, a text message, a type ahead message, etc. Because support and compare posts include assigning a bounty value to be distributed to other users of system 106, user submission processing module 108 is configured to request a bounty value from the user in a step 308. Following selection of the bounty value, the user presses done to finalize the user submission and the user submission is displayed in the display interface 112 in a step 310. Displaying the post may further include highlighting the user submission to friends associate with the user, to communities associated with commercial identifier is included in the user submission, etc.

Following successful completion of the posting, user submission processing module 108 can be configured to update user account information reflecting the completed action taken by the user in a step 312. Processing module 108 is further configured to track user actions and to award user tradable currency to the user based on satisfaction of one or more defined metrics. For example, a user may be rewarded for each user submission, for each reply to a user submission, for each sharing of a user submission on an external social media site, such as Facebook or twitter, for logging in to system 100, for responding to a compare user submission, etc. Users may also be rewarded with user tradable currency for actions in composing user submissions such as attaching photos, attaching video, rating products, attaching links, etc. According to an exemplary embodiment, submission processing module 108 may be configured to implement an hourly and/or a daily maximum to limit the amount of user tradable currency that a user can obtain any one particular session to encourage repeated visits to the system 106.

The computer system 106 implementing a social media network may also implement a wide spectrum of additional functions related to the exchange of messages. Examples include capturing information about users making submissions, capturing information regarding the contents of the user submissions, capturing information regarding commercial identifier submitted in user submissions, etc.

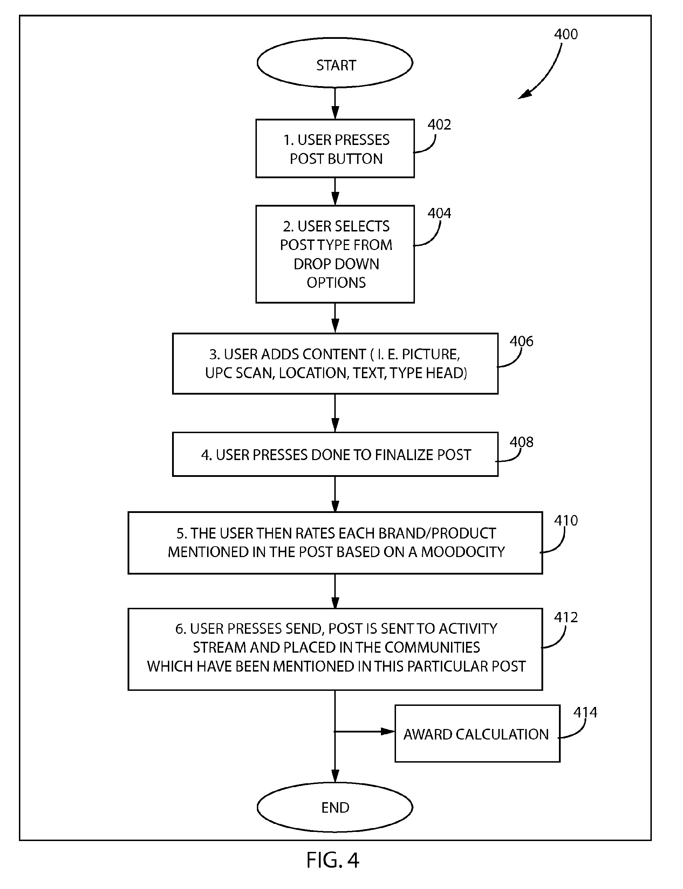

Referring now to FIG. 4, a flowchart 400 illustrating a method for processing an experience post or a suggestion post, as introduced in FIG. 2A, is shown in further detail, according to an exemplary embodiment. In a step 402 and similar to step 302, the user presses the post button, for example the create post icon 224 on display 220. In response, module 108 prompts the user to select a post type from drop-down options in a step 404. Thereafter, in a step 406, the user adds content such as, for example, a picture, a UPC scan, a user location, a text message, a type ahead message, etc. Following completion of the user submission, the user presses done to finalize the user submission in a step 408.

Following completion of the user submission, in a step 410, categorization processing module 110 is configured to analyze the user submission to identify one or more commercial product identifiers contained in the post. Analyzing a user submission may include analyzing the content of the data file submitted by the user to search for commercial product identifiers contained therein. Analyzing content may include searching through a text file to identify commercial product brand names, pattern matching on image to identify one or more instances of commercial product contained therein, performing text to speech conversion on audio file and searching through the resultant text file to identify commercial product brand names, etc. as are well known in the art. Following identification of one or more commercial product identifiers, the user is prompted to provide a product rating for each brand/product mentioned in the user submission. Thereafter, the user submission is displayed in the display interface 112 in a step 412. Displaying the post may further include highlighting the user submission to friends associated with the user, to communities associated with commercial identifier that is referenced in the user submission, etc. In a step 414, processing module 108 is configured to determine whether to award the user with user tradable currencies based on the completed action as described above in further detail with reference to FIG. 3.

Referring again to Fig. 1, a product identifier database 114 is configured to include a plurality of commercial product records, each record including at least one commercial identifier selected from the group of a commercial product name, a commercial product image, and terms used to identify the commercial product. The information included in the product identifier database 114 may be used, for example by submission processing module 108 to identify one or more commercial products referenced in a user submission that has been provided by a user to system 106.

Accordingly to an exemplary embodiment, submission processing module 108 is configured to identify a plurality of commercial products referenced in a user submission that has been provided by a user to system 106. Accordingly, module 108 identifies a number of different products and categorizes submissions, user activities, etc. as being associated with each of the products. Module 108 may be configured to apportion credit between each product, assign full credit to all of the products, request apportionment of credit from the user, etc.

For example, according to an exemplary embodiment, submission processing module 108 is configured to request a mood sentiment from the user for each product or brand referenced in the user submission. The user may be provided with currency based on the selection of the mood sentiment. The mood sentiment may be essentially a macro level feedback mechanism indicating to other users whether the user providing the submission was expressing, for example, positive, negative, or neutral mood sentiment toward the product or brands referenced in the submission.

User account database 116 is also configured to include a plurality of user records, each user record including a plurality of data fields associated with a unique user in the social media setting, the data fields including at least a user name and user security information. The user account may further include a complete record of commercial products identified by user, a value indicating the amount of user tradable currency that has been earned by the user based on their activities on system 106, a complete transaction history involving user tradable currency by the user, a listing of users of system 106 that the user-defined record has identified as "friends," a transaction history describing all user interactions with system 106, and any other information that may be useful in implement the functionality described herein.

Advantageously, using the system 106, users are rewarded and recognized for sharing their experiences with a particular commercial product or other branded experience. Further, users can receive instant feedback on their daily brand experiences from people that there identified as friends within system 106. Further, system 106 may be used by interested parties associated with consumer product identifiers to monitor and react to social media trends, identify target customers with loyalty to a brand and genuine expertise utilizing the brand, respond to consumer concerns, etc.

Various alternatives are contemplated as being within the scope of the following claims particularly pointing out and distinctly claiming the subject matter regarded as the invention. It is also to be understood that, although the foregoing description and drawings describe and illustrate in detail one or more preferred embodiments of the present invention, to those skilled in the art to which the present invention relates, the present disclosure will suggest many modifications and constructions, as well as widely differing embodiments and applications without thereby departing from the scope of the invention.

The skilled person will appreciate that a feature described in relation to any one aspect, or embodiment, of the invention may be applied, mutatis mutandis, to any other aspect, or embodiment, of the invention.

## Claims

1. A computer-implemented system for receiving user input to categorize user submissions in a social media setting, comprising:
an identifier database including a plurality of product records, each record including at least one identifier selected from the group of a product name, a product image, and terms used to identify the product;
a user account database including a plurality of user records, each user record including a plurality of data fields associated with a unique user in the social media setting, the data fields including at least a user name and user security information;
a user submission module configured to:
receive a plurality of user submissions, each user submission including at least one identifier;
request a user submission categorization for each received user submission; and
receive the user submission categorization;
a user submission display interface configured to cause display of the received user submissions on at least one computer device in communication with the system, the submissions being displayed in accordance with the received categorizations and in association with the at least one identifier in the user submissions; and
a categorization processing module configured to perform a user submission action to at least one data field in the user account database based on the received user submission categorization.

2. The system of claim 1, wherein the user submission action includes crediting a user currency data field in the user account database.

3. The system of claim 2, wherein the user submission action includes incrementing a counter associated with the at least one identifier included in the user submission and crediting the user currency data field is dependent on the value of the counter relative to an award threshold.

4. The system of claim 3, wherein the award threshold includes an hourly award threshold and a daily award threshold.

5. The system of claim 1, wherein the user submission categorization is selected from the group of a support category, an experience category, a suggestion category, and a comparison category.

6. The system of claim 5, wherein the user categorization processing module is configured to receive a bounty amount from a first user providing a first submission, and the user submission action comprises:
debiting a user currency data field of the first user by the bounty amount; and
crediting a user currency data field of a second user by the bounty amount, the second user providing a second submission in response to the first submission.

7. The system of claim 6, wherein the user submission module is configured to request submission of the bounty amount based on a selection of the support or comparison categories.

8. A computer-implemented method for receiving user input to categorize user submissions in a social media setting, comprising:
receiving a user submission including at least one identifier selected from the group of a product name, a product image, and terms used to identify the product;
receiving a user submission categorization for the received user submission;
perform a user submission action to at least one data field in a user account database including a plurality of user records, each user record including a plurality of data fields associated with a unique user in the social media setting based on the received user submission categorization; and
causing displaying of the received user submissions on at least one computer device in communication with the system, the submission being displayed in accordance with the received categorization and in association with the at least one identifier in the user submissions.

9. The method of claim 8, wherein the user submission action includes crediting a user currency data field in the user account database.

10. The method of claim 9, wherein the user submission action includes incrementing a counter associated with the at least one identifier included in the user submission and crediting the user currency data field is dependent on the value of the counter relative to an award threshold.

11. The method of claim 10, wherein the award threshold includes an hourly award threshold and a daily award threshold.

12. The method of claim 8, wherein the user submission categorization is selected from the group of a support category, an experience category, a suggestion category, and a comparison category.

13. The method of claim 12, comprising: receiving a bounty amount from a first user providing a submission, the user submission action comprising:
debiting a user currency data field of the first user by the bounty amount; and
crediting a user currency data field of a second user by the bounty amount for a second user, the second user providing a second submission in response to the first submission.

14. The system of claim 13, wherein the user submission module is configured to request submission of the bounty amount based on a selection of the support or comparison categories.

15. A computer readable medium containing computer-executable instructions, that when performed by a processor perform the method of any of steps 8 to 14.
